# EUROPEAN PATENT SPECIFICATION

(11) **EP 4 342 659 B1**
(45) Date of publication and mention of the grant of the patent: **26.11.2025**
(21) Application number: 22197138.5
(22) Date of filing: 22.09.2022
(51) Int. Cl.: B29C 65/02, B29C 65/40, F03D 1/06, B29C 65/48, B29C 65/50, B29C 65/70, B29C 65/08, B29C 65/10, B29C 65/14, B29C 65/16, B29C 65/20, B29C 65/22, B29C 65/36, B29K 105/06, B29L 31/08, B29C 65/12

(54) **JOINING COMPOSITE ELEMENTS OF WIND TURBINE BLADES**
VERBINDUNG VON VERBUNDELEMENTEN VON WINDTURBINENSCHAUFELN
ASSEMBLAGE D'ÉLÉMENTS COMPOSITES DE PALES D'ÉOLIENNE

(43) Date of publication of application: 27.03.2024
(73) Proprietor: LM Wind Power A/S, 6000 Kolding (DK)
(72) Inventor: NIELSEN, Lars, 6000 Kolding (DK)
(74) Representative: ZBM Patents - Zea, Barlocci & Markvardsen

(56) References cited:
- EP-A1- 4 000 877
- GB-A- 2 463 250
- US-A1- 2017 058 863
- US-A1- 2017 074 237

## Description

The present disclosure relates to methods for joining a first composite element and a second composite element of a wind turbine blade and wind turbine blade comprising the first composite element joined to the second composite element according to any of these methods.

### BACKGROUND

Modern wind turbines are commonly used to supply electricity to the electrical grid. Wind turbines of this kind generally comprise a rotor with a rotor hub and a plurality of blades. The rotor is set into rotation under the influence of the wind on the blades. The rotation of the rotor shaft drives the generator rotor either directly ("directly driven") or through the use of a gearbox. The gearbox (if present), the generator, and other systems are usually mounted in a nacelle on top of a wind turbine tower.

Wind turbine blades have a root portion to be attached to the rotor hub and a tip portion at an opposite end. The root portion of the wind turbine blade usually has a generally round cross-section. Some other regions, such as a profiled or an airfoil portion that is furthest away from the rotor hub, have a cross-section with an aerodynamic profile.

Wind turbine blades are generally made from fiber-reinforced polymers or plastics (FRP's), which are composite materials consisting of a polymer matrix and reinforced with fibers. The fibers are usually glass or carbon and provide longitudinal stiffness and strength. The polymer matrices allow for the fibers to be bound together and add toughness and delamination strength. Polymer matrices are usually made from thermoset materials, e.g. thermoset resins.

Wind turbine blades are commonly manufactured by joining several pieces of fiber-reinforced polymers, e.g. glass or carbon fiber reinforced polymers. These pieces or segments are firstly produced and then joined. These pieces may be molded using a resin infusion technology or a prepreg technology. In resin infusion technology, fibers are placed in a mold and then, the resin is injected into the mold cavity under pressure. This resin fills the volume between the cavity and then the resin is cured or hardened. Examples of resin infusion technology may be Resin Transfer Molding (RTM) or Vacuum Assisted Resin Transfer Molding (VARTM). In VARTM, the resin is injected under a vacuum or pressure lower than atmospheric.

Blade shell parts may be molded, e.g. by using a VARTM technique, and then bonded through an adhesive. For example, a pressure side blade shell may be bonded to a suction side blade shell through joining lines along the leading edge and the trailing edge. A load-carrying structure may be arranged between the pressure side blade shell and the suction side blade shell. The load-carrying structure may comprise opposite spar caps bonded to the respective blade shell.

In recent times there has been a trend to increase the size of wind turbine blades to capture more wind. Larger blades may involve larger molds during manufacturing and may complicate transporting the blades to the wind turbine site.

Wind turbine blades may be manufactured in several segments to reduce transporting constraints. These blade segments are transported to the wind turbine site and assembled at this site. Connecting these blade segments generally involves adding metal parts to the blade segments and connecting these metal parts together. The metal parts may be bolted or welded. However, the use of these metal parts may increase the weight of the wind turbine blade. Furthermore, these metallic joints may suffer from fatigue and corrosion.

The size of the molds may be reduced by using more molds with a reduced size. Accordingly, wind turbine blades may be formed by joining several blade parts. For example, the blade shell may be formed by joining a plurality of blade shell parts. These blade parts may be joined through adhesive or glue. However, the use of adhesive or glue may require a complex preparation of the areas to be glued. Furthermore, a glue joint involves a relatively long curing time and inspecting the glue joint is generally required for safety reasons. For this reason, glue joints in wind turbine blades may be complex and time-consuming. Furthermore, glue joints may suffer from fatigue and surface degradation which may adversely affect the bonding strength. Cracks may also be easily propagated in glue or adhesive joints.

Document US 2017/0058863 A1, in accordance with its abstract, states that a wind turbine rotor blade may generally include a blade root, a blade tip opposite the blade root and a body shell extending between the blade root and the blade tip. The body shell may include a pressure side and a suction side extending between a leading edge and a trailing edge and may define an outer shell surface. The rotor blade may also include a leading edge cap coupled to the body shell at the leading edge. The leading edge cap may be formed from a fiber-reinforced composite including an inner surface extending directly adjacent to the body shell along a portion of the outer shell surface and an outer surface opposite the inner surface. The fiber-reinforced composite may include a plurality of fibers surrounded by a thermoplastic resin material, with the thermoplastic resin material extending throughout the fiber reinforced composite from the inner surface to the outer surface.

Document GB 2463250 A, in accordance with its abstract, states that wind turbine blade that comprises at least one component formed of two or more connected component sections, each component section comprising at least one thermoplastic end region. The thermoplastic end regions of adjacent component sections are welded together at a weld interface. Preferably the weld interface is a resistance weld interface. A wire mesh may be embedded in at least one of the end regions. Alternative welding techniques for example ultrasonic, infra red, ultra violet or friction stir welding may be used. One of the components may include a longitudinal beam.

The present disclosure provides examples of systems and methods that at least partially resolve some of the aforementioned disadvantages.

### SUMMARY

In a first aspect, a method for joining a first composite element and a second composite element of a wind turbine blade according to claim 1 is provided. Each of the first and the second composite elements comprises one or more edge joining portions having a thermoplastic material. The method comprises positioning one edge joining portion of the first composite element to face one edge joining portion of the second composite element and plastic welding the one edge joining portion of the first composite element to the one edge joining portion of the second composite element.

According to this aspect, composite elements of a wind turbine blade may be joined together in a simple process. As plastic welding thermoplastic materials is a relatively simple joining technique, joining times may be reduced. The method may allow using a plurality of composite elements for manufacturing a wind turbine blade. Each of these composite elements may be molded in a specific mold. The complexity of the molding process may be consequently reduced. Longer blades may thus be manufactured efficiently.

Furthermore, as plastic welding is used, joint strength may thus be further increased. The structural integrity of the wind turbine blade may thus be further increased. Adhesive joints may thus be avoided, or at least reduced. Stronger joints and increasing blade life may thus be obtained. As the adhesive or glue joints are replaced by plastic welding, the overall weight of the wind turbine blade may also be reduced.

Contrary to thermoset materials, thermoplastic materials can melt under heat after curing. The joint of these composite elements can be repaired by melting again the thermoplastic material that forms the joint. Maintenance or retrofitting operations of wind turbine blades may thus be enhanced. Furthermore, thermoplastic materials may also be recycled.

In a further aspect, a wind turbine blade according to claim 11 is provided. The wind turbine blade comprises the first composite element joined to the second composite element according to the joining method according to any example of the present disclosure.

Advantages derived from this aspect may be similar to those mentioned regarding the first aspect.

### BRIEF DESCRIPTION OF THE DRAWINGS

Non-limiting examples of the present disclosure will be described in the following, with reference to the appended drawings, in which:
Figure 1 illustrates a perspective view of a wind turbine according to one example;
Figure 2 shows a perspective view of a wind turbine blade according to one example;
Figure 3 shows a cross-sectional view of the wind turbine blade of figure 2;
Figure 4 is a block diagram of a method for joining a first composite element and a second composite element of a wind turbine blade according to an example of the present disclosure;
Figure 5a schematically represents a first composite element to be joined to a second composite element according to an example;
Figure 5b schematically represents the edge joining portion of the first composite element of figure 5a facing the edge joining portion of the second composite element of figure 5a;
Figure 5c schematically represents the first composite element of figures 5a-5b plastic welded to the second composite element of figures 5a - 5b;
Figures 6a and 6b are examples of a first composite element 100 according to an example;
Figures 7a - 7c schematically represent joining the first composite element and the second composite element comprising inserting a connector between the first composite element and the second composite element according to an example ;
Figures 8a - 8c schematically represent joining a first composite element to a second composite element according to an example of the present disclosure; and
Figure 9 schematically represents a wind turbine blade comprising a first composite element joined to a second composite element according to an example of the present disclosure.

### DETAILED DESCRIPTION OF EXAMPLES

In these Figures, the same reference signs have been used to designate matching elements.

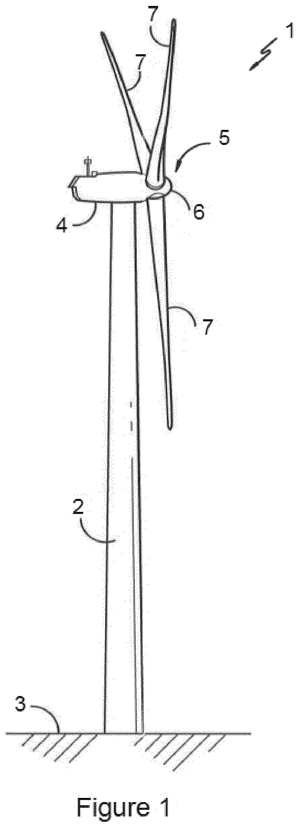

Figure 1 illustrates a perspective view of one example of a wind turbine 1. As shown, the wind turbine 1 includes a tower 2 extending from a support surface 3, a nacelle 4 mounted on the tower 2, and a rotor 5 coupled to the nacelle 4. The rotor 5 includes a rotatable hub 6 and at least one wind turbine blade 7 coupled to and extending outwardly from the rotor hub 6. For example, in the illustrated example, the rotor 5 includes three wind turbine blades 7. However, in an alternative embodiment, the rotor 5 may include more or less than three blades 7. Each wind turbine blade 7 may be spaced from the rotor hub 6 to facilitate rotating the rotor 5 to enable kinetic energy to be transferred from the wind into usable mechanical energy, and subsequently, electrical energy. For instance, the rotor hub 6 may be rotatably coupled to an electric generator 10 positioned within the nacelle 4 or forming part of the nacelle to permit electrical energy to be produced.

Blades 7 are coupled to the rotor hub 6 with a pitch bearing in between the blade 7 and the rotor hub 6. The pitch bearing comprises an inner ring and an outer ring (shown). A wind turbine blade may be attached either to the inner bearing ring or to the outer bearing ring, whereas the hub is connected to the other. A blade 7 may perform a relative rotational movement with respect to the rotor hub 6 when a pitch system is actuated. The inner bearing ring may therefore perform a rotational movement with respect to the outer bearing ring.

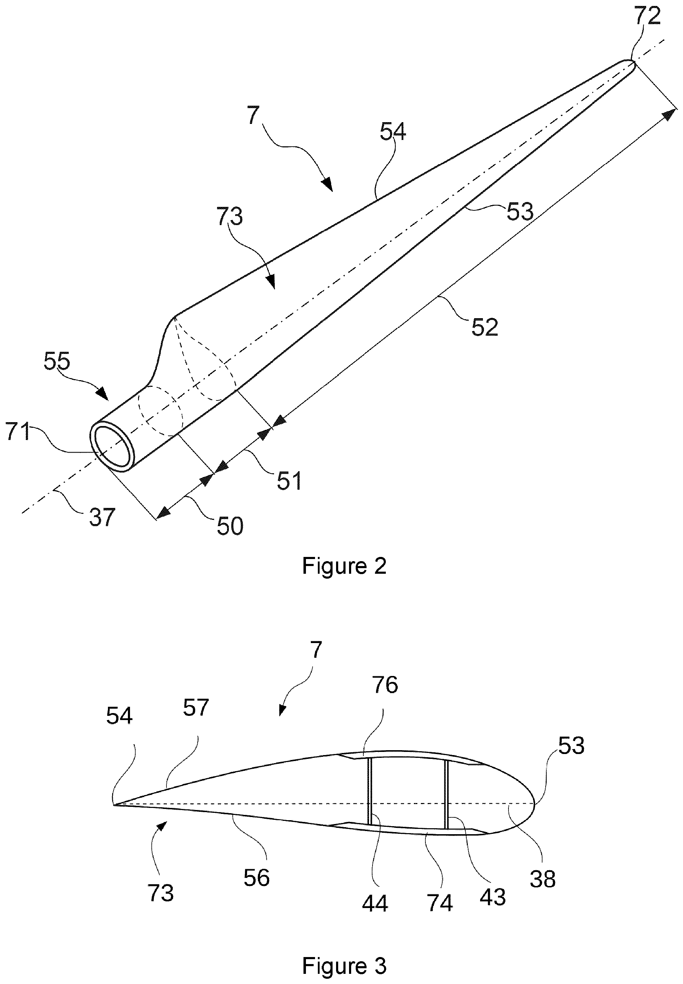

Figure 2 illustrates an example of a wind turbine blade 7. The wind turbine blade 7 extends in a longitudinal direction or spanwise direction 37 from a blade root end 71 to a blade tip end 72. The blade 7 comprises a blade root region or portion 50 closest to the rotor hub, a profiled or an airfoil portion 52 furthest away from the rotor hub and a transition portion 51 between the blade root portion 50 and the airfoil portion 52. The blade 7 comprises a leading edge 53 facing the direction of rotation of the blade 7 when mounted on the rotor hub, and a trailing edge 54 facing the opposite direction of the leading edge 53.

In the herein disclosed examples, the length of the wind turbine blade 7 from the blade root end 71 to the blade tip end 72 is above 60 meters, for instance, above 100 meters. However, wind turbine blades 7 of any length may be used as well.

The airfoil portion 52 has a shape designed to generate lift, whereas the blade root portion 50 has a circular or elliptical cross-section for structural considerations and easy mounting of the blade to the rotor hub. The diameter or the chord of the blade root portion 50 may be constant along the entire blade root portion 50. At the transition portion 51, the profile gradually changes from the circular or elliptical cross-section of the blade root portion 50 to the airfoil profile of the airfoil portion 52.

The wind turbine blade 7 comprises a blade shell 73. The blade shell 73 comprises an outer side or surface that defines the external shape of the blade, e.g. the outer shape at the blade root portion and the outer shape at the airfoil portion. The blade shell 73 also comprises an inner side or surface that defines the internal volume of the blade and faces a load-carrying structure (not shown). The blade shell 73 may be made of fiber-reinforced polymer or plastics, e.g. glass fiber and/or carbon fiber.

The blade shell may be formed by a plurality of blade shell parts. The plurality of blade shell parts may be joined together to form the blade shell. The blade shell parts may be formed and then joined according to any of the examples herein disclosed. Resin infusion technology, e.g. RTM or VARTM, or prepreg technology may be used for manufacturing the blade shell parts.

In some examples, the blade shell parts are arranged in a lengthwise end-to-end configuration. In some examples, two or more blade shell parts are arranged between the leading and the trailing edge.

In some examples, the blade shell comprises a pressure side blade shell part and a suction side blade shell part. The pressure side blade shell part may be joined to the suction side blade shell part along joining lines along the leading edge 53 and the trailing edge 54. The pressure side blade shell part and/or the suction side blade shell part may be formed by joining a plurality of blade shell parts.

The blade shell parts of this example comprise a composite material. The composite material may comprise reinforcement fibers and resin. The reinforcement fibers may be glass fibers, carbon fibers, aramid, or basalt. The resin of this example may be thermoplastic or thermosetting resin. Examples of thermosetting resins may include epoxy, polyester, or vinyl ester resin.

In some examples, the blade shell parts are formed from a composite material. The laminate material may comprise a plurality of layers of reinforcement fibers embedded in a resin. The orientation of the fibers of each of the layers may vary. For example, some layers comprise unidirectional fibers and other layers biaxial fibers. Some layers may also comprise triaxial fibers. The laminate composite material may comprise a thickness between 20 mm and 80 mm.

In some examples, the blade shell parts comprise a core material arranged between laminate composite materials. The core material generally includes lightweight materials such as wood, e.g. balsa, foam, e.g. extruded polystyrene foam, or any combination of them. The thickness of the core material may be between 20 mm and 100 mm. The thickness of the laminate composite material enclosing the core material may be according to any of the examples herein disclosed. Blade shell parts of this kind may be known as sandwich panels.

Figure 3 shows a cross-sectional view of the wind turbine blade of figure 2. A suction side 57 and a pressure side 56 extend from the leading edge 53 to the trailing edge 54. The wind turbine blade 7 further comprises a chord line 38 between the leading edge 53 and the trailing edge 54. The chord line 38 extends in an edgewise direction.

The wind turbine blade 7 comprises a blade structure that provides stiffness to the wind turbine blade. The blade structure of this example comprises the blade shell 73 and a load-carrying structure. In further examples, the blade structure may also comprise a plurality of structural ribs arranged along the length of the blade. In this example, the load-carrying structure comprises shear webs, such as a leading edge shear web 43 and a trailing edge shear web 44. The load-carrying structure of this figure also comprises a pressure side spar cap 74 arranged at the pressure side 56 and a suction side spar cap 76 at the suction side 57. In some examples, the shear webs 43 and 44 could be a spar box with spar sides, such as a trailing edge spar side and a leading edge spar side.

The spar caps of this example are formed from a composite material, e.g. reinforcement fibers and resin. The spar caps may comprise a laminate composite material, i.e. layers of reinforcement fibers. The spar caps are joined to the blade shells. In some examples, the spar caps comprise a plurality of spar cap parts extending edge to edge in the lengthwise direction.

The spar caps may be joined to the blade shell according to any of the examples herein disclosed.

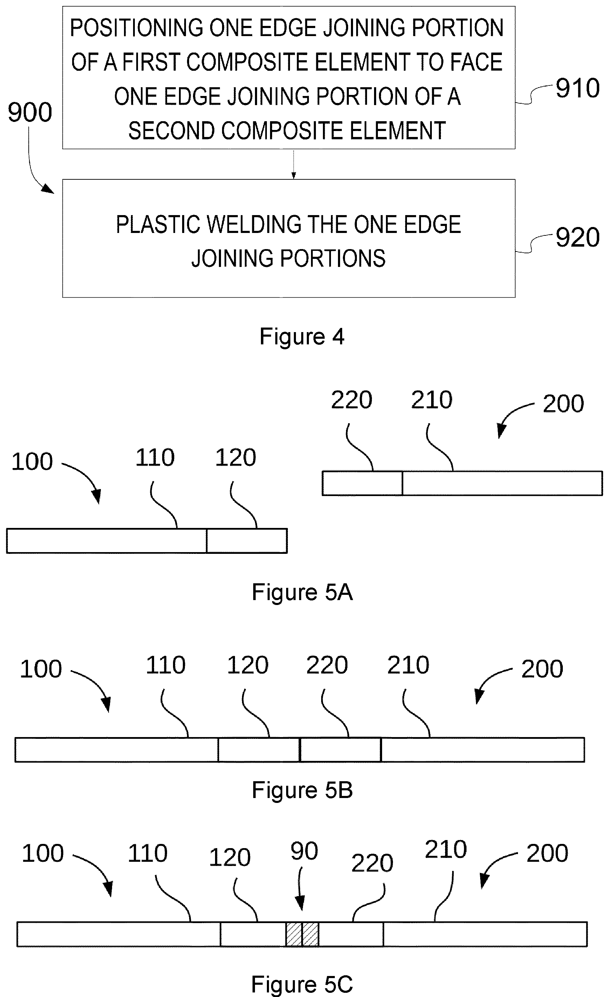

Figure 4 is a block diagram of a method for joining a first composite element and a second composite element of a wind turbine blade according to an example of the present disclosure. The first composite element comprises one or more edge joining portions. The second composite element also comprises one or more edge joining portions. The edge joining portions comprise a thermoplastic material. In some examples, the edge joining portions may comprise reinforcement fibers and a thermoplastic resin. The reinforcement fibers comprise glass, carbon, aramid and/or basalt.

The thermoplastic material allows plastic welding the composite elements. In some examples, the thermoplastic material comprises a thermoplastic resin. The structural properties of this thermoplastic resin may be at least similar to the thermoset resin, e.g. to the epoxy resin. Examples of thermoplastic materials are polystyrene, poly(acrylonitrile butadiene styrene), poly(acrylonitrile styrene acrylate), poly(styrene acrylonitrile), polycarbonate, polyether ether ketone, polybutylene terephthalate, thermoplastic elastomer or any combination of them. The selected thermoplastic material, e.g. a thermoplastic resin, comprises a melting point higher than 60°C. In some examples, the thermoplastic material, e.g. a thermoplastic resin comprises a melting point higher than 100°C, e.g. higher than 120°C. The thermoplastic material can thus remain solid, i.e. not melting, when the wind turbine blade is in operation.

The first and the second composite elements may be blade shell parts and/or spar cap parts. For example, the first composite element may be a first blade shell part and the second composite element may be a second blade shell part. In other examples, the first composite element is a first blade shell part and the second composite element may be a spar cap part. In further examples, the first composite element may be a first spar cap part and the second composite element may be a second spar cap.

These composite elements may comprise a laminate composite material. A core material is arranged between two laminates forming a sandwich panel.

The first composite element comprises a main portion attached to the one or more edge joining portions. The main portion comprises reinforcement fibers and resin. Additionally, the second composite element comprises a main portion attached to the one or more edge joining portions. The main portion and the edge joining portions may be molded and infused together.

The method 900 comprises positioning one edge joining portion of the first composite element to face one edge joining portion of the second composite element as represented at block 910. The first composite element and the second composite element may thus be arranged at a position suitable for plastic welding. The thermoplastic material of the corresponding edge joining portions may at least partially melt to join the two composite elements.

In some examples, at least a zone of the edge joining portions is arranged in contact. In some examples, positioning 910 one edge joining portion of the first composite element to face one edge joining portion of the second composite element comprises positioning the edge joining portions in a butt-welding configuration. The first and the second composite element are placed end-to-end with the corresponding edge joining portions having the thermoplastic material facing each other. In some examples not within the scope of the appended claims, the edge joining portions is substantially straight. In other examples, The edge joining portions is beveled. The first and the second composite elements may be arranged in a V-groove configuration. A butt-welding configuration may be used for plastic welding blade shell parts.

In other examples not within the scope of the appended claims, the first and the second composite element may be arranged in a lap-welding configuration. The edge joining portion of the first composite element may overlap the edge joining portion of the second composite element. This welding configuration may be used for plastic welding a blade shell part with a spar cap part.

In addition, the method 900 comprises plastic welding the one edge joining portion of the first composite element to the one edge joining portion of the second composite element as represented at block 920. The first composite element may thus be joined to the second composite by plastic welding the thermoplastic material of the respective edge joining portions.

In some examples, plastic welding 920 comprises heating a region of the one edge joining portion of the first composite element and/or of the second composite element. The thermoplastic material of the heated region may be melted to fill the gap between the edge joining portion of the first composite element and the edge joining portion of the second composite element. A weld is thus formed between the respective edge joining portions.

In some examples, the heated region is heated to a temperature higher than the melting temperature and lower than the degradation temperature of the thermoplastic material to be melted. Plastic welding may include heating a region of the joining edge portion of the first composite element to a temperature equal to or higher than 150° C. In some examples, the heating temperature is between 150 °C and 300 °C, e.g. 200 °C and 250°C.

Plastic welding may additionally comprise supplying a filler to a weld zone. The filler may thus be supplied between the respective edge joining portions. The filler may be heated to melt and fill the gap between the edge joining portion of the first composite element and the edge joining portion of the second composite element. The filler may comprise a thermoplastic material.

In some examples, plastic welding comprises melting the filler to at least partially mix the melted filler with a region of the one edge joining portion of the first composite element and/or of the second composite element in the weld zone. The thermoplastic material of the heated region may be melted and may be mixed with the melted filler. In some examples, the filler is melted and mixed with the melted thermoplastic material of the edge joining portion of the first composite element and of the edge joining portion of the second composite element.

Plastic welding may comprise at least one of laser welding, direct heating welding, induction welding, ultrasonic welding, resistance welding and infrared welding. These methods cause a bonding fusion process. Clamping devices may be used for positioning and maintaining the composite elements in a welding position. These clamping devices may also be used to press one of the composite elements against the other.

Laser welding, direct heating welding and infrared welding are thermal welding methods. Direct heating welding may comprise heating the adjacent edge joining portions and pressing one of the composite elements against the other. Direct heating welding may comprise hot gas welding which involves melting a filler. Direct heating welding may also comprise hot plate welding in which the composite elements are arranged on a hot plate the melt a zone of the adjacent edge joining portions.

In infrared welding, the edge joining portion of the first composite element and the edge joining portion of the second composite element are brought into close proximity, e.g. in contact. An infrared source heats the edge joining portions and a zone of the edge joining portions is melted, thereby a weld between the composite elements is formed.

Laser welding involves irradiating the thermoplastic material of the edge joining portions. Laser welding may comprise pressing one of the composite elements against the other and then moving a laser beam along the welding line. A diode laser is a type of laser that may be employed for laser welding two thermoplastic materials.

In resistance welding, an electrically conductive implant is inserted between the edge joining portion of the first composite element and the edge joining portion of the second composite element. An electric current is applied to this electrically conductive implant to cause resistive heating. This heat directly causes the melting of the surrounding thermoplastic material. Pressure may be applied to maintain the first and the second composite elements in the welding position.

Similar to resistance welding, induction welding employs an implant to heat the thermoplastic material. In induction welding, the implant comprises an electrical conductor embedded in an electrical insulator material. An induction coil is energized to generate an electromagnetic field that acts on the electrical conductor. The electrical conductor is then heated, and this heat is applied to the thermoplastic material.

In ultrasonic welding, high-frequency amplitude vibration is used to create heat by way of friction between the edge joining portion of the first composite element and the edge joining portion of the second composite element. The first composite element and the second composite are held together, e.g. with a clamping device, and then the ultrasonic vibrations are applied.

Figure 5a schematically represents a first composite element 100 to be joined to a second composite element 200. The first composite element 100 comprises a main portion 110 and one edge joining portion 120. The second composite element 200 of this example also comprises a main portion 210 and one edge joining portion 220. In other examples, the first composite element and/or the second composite element may comprise a plurality of edge joining portions. These additional edge joining portions may be used for joining the composite element to an additional composite element.

Prior to joining the first composite element 100 to the second composite element 200, the composite elements 100, 200 are formed. The edge joining portions 120, 220 are attached to the corresponding main portions 110, 210. The main portion 110 and the edge joining portion 120 of the first composite element 100 may be molded and infused together. The first composite element is thus an integral molded composite element. Similarly, the main portion 210 and the edge joining portion 220 of the second composite element 200 may be molded and infused together. Joining the first composite element 100 to the second composite element 200 may comprise forming the first composite element 100 and/or the second composite element 200. Forming one of the first composite element 100 and/or the second composite element 200 may comprise molding the main portion 110, 210 and the corresponding edge joining portions together. Structural integrity of the composite elements 100, 200 is thus enhanced.

The edge joining portions 120, 220 comprise a thermoplastic material. In some examples, the edge joining portions 120, 220 further comprise reinforcement fibers. The reinforcement fibers may be for example glass fiber and/or carbon fiber. The type and the density of fibers of the edge joining portion 120 of the first composite element 100 and of the edge joining portion 220 of the second composite element 200 may be different. For example, one edge joining portion may comprise glass fiber and the other edge joining portion may comprise carbon fiber. **In** other examples, the type and/or the density of the edge joining portion 120 of the first composite element 100 may be substantially the same as of the edge joining portion 220 of the second composite element 200.

In some examples, the thermoplastic material of the edge joining portion 120 of the first composite element 100 is different from the thermoplastic material of the edge joining portion 220 of the second composite element 200. In some examples, both edge joining portions 120, 220 are made from the same type of thermoplastic material.

In some examples, the reinforcement fibers of the main portion 110, 210 and of the edge joining portions 120, 220 of a composite element 100, 200 may be the same. In other examples, the edge joining portions 120, 220 may comprise different types of reinforcement fibers. In some examples, the edge joining portions 120, 220 and the main portion 110, 210 comprise a similar density of reinforcement fiber. In other examples, the density of reinforcement fibers in the main portion 110, 210 and in the edge joining portion 120, 220 of a composite element 100, 200 may be different.

In some examples, the reinforcement fibers and/or the resin of the main portion 110 of the first composite element 100 and of the main portion 210 of the second composite element 200 are different. In some examples, the reinforcement fibers and/or the resin of the main portion 110 of the first composite element 100 and of the main portion 210 of the second composite element 200 are the same.

In some examples, the resin of the main portion of the first and/or the second composite element is a thermoset resin. Accordingly, the main portion 110 of the first composite element 100 may comprise a thermoset resin and the main portion 210 of the second composite element 200 may also comprise a thermoset resin.

In the example of figure 5a, the main portion 110, 210 of both the first composite element 100 and the second composite element 200 comprise thermoset resin. The reinforcement fibers of the main portions 110, 210 are thus embedded in thermoset resin.

However, in other examples, the main portions may comprise a thermoplastic material. This thermoplastic material may be the same as the thermoplastic material of the edge joining portions 120, 220. For example, the main portions may comprise a thermoplastic resin. This thermoplastic resin may be the same as the thermoplastic resin of the edge joining portions 120, 210.

The first composite element 100 and the second composite element 200 of this figure are blade shell parts. In other examples, the component elements may be spar cap parts or one spar cap part and one blade shell part. In this example, the first composite element 100 and the second composite element 200 are formed from a laminate composite material that comprises a plurality of layers of reinforcement fibers embedded in a resin, e.g. a thermoplastic resin. In other examples, the composite elements may be formed by an upper and a lower laminate composite material and a core material arranged therebetween.

Figure 5b schematically represents the first composite element 100 and the second composite element 200 of figure 5a facing the corresponding edge joining portions. The edge joining portion 120 of the first composite element 100 faces the edge joining portion 220 of the second composite element 200. The composite elements are arranged in a position suitable for being plastic welded.

In this example not within the scope of the appended claims, the edge joining portions 120, 220 are substantially straight and are arranged in a butt-welding configuration. In other examples, the edge joining portions 120, 220 may be beveled. In these examples, the edge joining portions may be arranged in a V-shape or U-shape butt-welding configuration. In V-shape or U-shape butt-welding configuration, a filler may be used for filling the space formed between edge joining portions.

In some examples, the edge joining portions 120, 220 are in contact. In other examples, there may be a gap between the edge joining portions 120, 220. The gap may be less than 5 mm.

A tool may be used to move at least one of the composite elements towards the other. The tool may comprise clamping devices to retain the composite elements in position for being plastic welded. In some examples, the tool may be used to press one of the composite elements towards the other.

Figure 5c schematically represents the first composite element of figures 5a - 5b plastic welded to the second composite element of figures 5a - 5b. A weld zone 90 is formed between the edge joining portion 120 of the first composite element 100 and the edge joining portion 220 of the second composite element 200. During plastic welding, a weld zone 90 is formed between the edge joining portion 120 of the first composite element 100 and the edge joining portion 220 of the second composite element 200. The weld zone 90 allows bonding of the thermoplastic material of the edge joining portions 120 and 220.

The weld zone 90 is generated by applying heat. Heat may be applied according to any of the plastic welding methods herein disclosed. A part of the thermoplastic material of the edge joining portion 120 of the first composite element 100 and a part of the thermoplastic material of the edge joining portion 220 of the second composite element 200 are melted. Then, these melted parts are mixed to form the weld zone 90.

In some examples, during plastic welding, a filler may be supplied to the weld zone 90. The filler may be mixed with the melted zones of the edge joining portions 120 and 220.

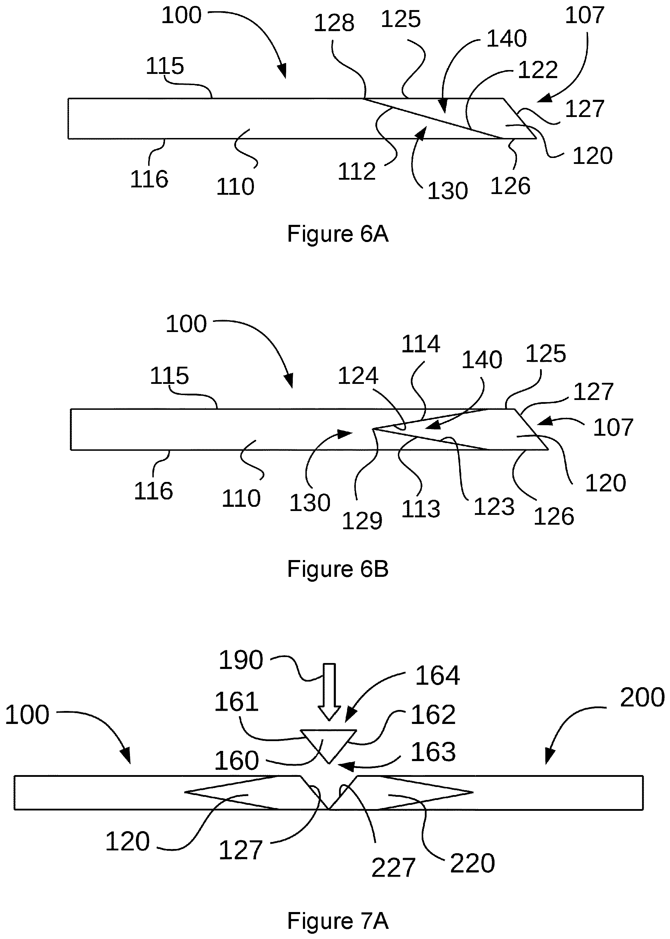

Figures 6a and 6b are examples of a first composite element 100 according to an example.

Although in this figure only a first composite element is depicted, it should be noted that the second composite element may according to any of the first composite elements herein described.

In this example, the composite element is the first composite element. However, in other examples, the composite element of this figure is the second composite element.

The first composite element 100 of these figures comprises a main portion 110 attached to an edge joining portion 120. In these figures, the first composite element 100 is molded together, e.g. in a VARTM process. The main portion 110 of these figures comprises an upper surface 115 that is aligned with an upper surface 125 of the edge joining portion 120. Similarly, a lower surface 116 of the main portion 110 is aligned with a lower surface 126 of the edge joining portion 120.

In these figures, the first composite element 100 comprises a beveled shape. This allows butt-welding in a V-shape configuration. The first composite element comprises a first composite element outer side 107 comprising an inclined surface. The first composite element outer side 107 is defined by an outer surface 127 of the edge joining portion 120. The outer surface 127 extends between the lower surface 126 and the upper surface 125 of the edge joining portion 120. The outer surface 127 is inclined. This inclination forms the beveled shape. In other examples, the outer surface 127 may be substantially straight. In further examples, the outer surface 127 may comprise a rounded shape.

In these figures, the main portion 110 and the edge joining portion 120 are molded together to form the first composite element 100. After curing, the resin used during molding bonds the main portion 110 to the edge joining portion 120. In these examples, in addition to resin bonding, the main portion 110 is mechanically engaged with the edge joining portion 120. The main portion 110 comprises an engagement surface 130 and the edge joining portion 120 comprises an engagement surface 140. The engagement surface 130 of the main portion 110 is configured to mechanically engage the engagement surface 140 of the edge joining portion 120. A frictional force is generated between the engagement surfaces 130 and 140. The attachment of the main portion 110 to the edge joining portion is enhanced.

In some examples, one of the engagement surfaces 130, 140 comprises a plurality of protrusions and the other of the engagement surfaces 130, 140 comprises a plurality of depressions configured to receive the plurality of protrusions. The protrusions fit the depressions to further enhance the connection between the main portion 110 and the edge joining portion 120. The plurality of depressions may be formed by a plurality of channels or holes.

Referring now to figure 6a, the engagement surface 130 of the main portion 110 comprises an engagement inclined surface 112. The engagement inclined surface 112 extends from the lower surface 116 to the upper surface 115. The engagement inclined surface 112 of the main portion 110 is oriented in such a way that the upper surface 115 is shorter than the lower surface 116.

In figure 6a, the engagement inclined surface 112 of the engagement surface 130 of the main portion 110 engages an engagement inclined surface 122 of the engagement surface 140 of the edge joining portion 120. The engagement inclined surfaces 112 and 122 are in contact so as to generate a friction force to mechanically attach the main portion 110 to the edge joining portion 120.

In this figure, the engagement inclined surface 122 of the edge joining portion 120 extends from the lower surface 126 to the upper surface 125. A corner 128 is formed between the upper surface 125 and the engagement inclined surface 122. The edge joining portion 120 extends a length from the outer surface 127 to the corner 128 towards the main portion 110. This length may be between 50 mm and 200 mm, e.g. between 50 mm and 100 mm.

The length of the lower surface 126 of the edge joining portion 120 may be between 15% and 60 % of the length of the edge joining portion 120. This increases the surface in contact between the main portion 110 and the edge joining portion 120.

In this example, the engagement inclined surface 112 of the main portion 110 comprises a plurality of depressions. The engagement inclined surface 122 of the edge joining portion 120 comprises a plurality of the protrusions that fits the plurality of depressions of the engagement surface 130 of the main portion 110. Mechanical adhesion of the edge joining portion 120 to the main portion 110 may thus be increased. In other examples, the engagement inclined surface 122 of the edge joining portion 120 comprises the plurality of depressions and the engagement inclined surface 112 of the main portion 110 comprises the plurality of protrusions.

Referring now to figure 6b, the edge joining portion 120 is similar to the edge joining portion of figure 6a. However, the engagement surface 140 of the edge joining portion 120 of figure 6b comprises a lower engagement inclined surface 123 and an upper engagement inclined surface 124. The lower engagement inclined surface 123 and the upper engagement inclined surface 124 are joined at an inner end 129. In this figure, the upper engagement inclined surface 124 extends to the upper surface 125 and the lower engagement inclined surface 123 extends to the lower surface 126. As the edge joining portion 120 of figure 6a, the edge joining portion 120 of figure 6b comprises an outer surface 127 connecting the upper surface 125 to the lower surface 126. The outer surface 127 of the edge joining portion 120 defines the first composite element outer side 107.

In figure 6b, the lower engagement inclined surface 123 of the edge joining portion 120 is attached to a lower engagement inclined surface 113 of the main portion 110 and the upper engagement inclined surface 124 of the edge joining portion 120 is attached to an upper engagement inclined surface 114 of the main portion 110. The upper engagement inclined surface 114 of the main portion 110 extends between the lower engagement inclined surface 113 and the upper surface 115. The lower engagement inclined surface 113 of the main portion 110 of this figure extends between the upper engagement inclined surface 114 and the lower surface 116.

In the example of figure 6b, the region of the edge joining portion 120 defined by the upper engagement inclined surface 114 and the lower engagement inclined surface 113 is enclosed by the main portion 110. A region of the edge joining portion 120 is thus embedded into the main portion 110.

The edge joining portion 120 of figure 6b extends a length from the outer surface 127 to the inner end 129. This length may be between 50 mm and 200 mm, e.g. between 50 mm and 100 mm. Between 40% and 85 % of the length of the edge joining portion 120 is embedded into the main portion 110. This enhances the connection between the main portion 110 and the edge joining portion 120.

In this example, the upper engagement inclined surface 114 and the lower engagement inclined surface 113 of the main portion 110 comprises a plurality of depressions. The upper engagement inclined surface 124 and the lower engagement inclined surface 123 of the edge joining portion 120 comprises a plurality of the protrusions that fits the plurality of depressions of the engagement surface 130 of the main portion 110. Mechanical adhesion of the edge joining portion 120 to the main portion 110 may thus be increased. In other examples, the plurality of depressions may be arranged in the upper engagement inclined surface 114 or in the lower engagement inclined surface 113 of the main portion 110. In other examples, the depressions may be arranged in the engagement surfaces 140 of the one edge joining portion 120.

Figures 7a - 7c schematically represent joining the first composite element and the second composite element comprising inserting a connector between the first composite element and the second composite element.

In these figures, the first composite element 100 and the second composite element 200 are blade shell parts, each of them formed from a laminate composite material. In other examples, the composite elements may be spar cap parts made from a laminate composite material.

In these figures, a connector 160 is moved along a direction 190 to be inserted between the first composite element 100 and the second composite element 200. The connector 160 of these figures comprises a first side portion 161 and a second side portion 162. The first side portion 161 and the second side portion 162 comprise a thermoplastic material.

In some examples, the connector 160 is manufactured from a thermoplastic material. Extrusion or injection processes may be used for manufacturing these types of connectors. In other examples, the first side portion 161 and the second side portion 162 are coated with a thermoplastic material.

The connector 160 of these examples fills the gap between the edge joining portion 120 of the first composite element 100 and the edge joining portion 220 of the second composite element 200. The connector 160 is configured to engage the shape of the edge joining portions 120 and 220. In these examples, the first side portion 161 of the connector 160 engages the outer surface 127 of the edge joining portion 120 of the first composite element 100 and the second side portion 162 of the connector 160 engages the outer surface 227 of the edge joining portion 220 of the second composite element 200. Sealing of the joining is further improved.

In these figures, the outer surface 127 of the edge joining portion 120 of the first composite element 100 defines a first composite element outer side. The outer surface 227 of the edge joining portion 220 of the second composite element 200 defines a second composite element outer side. The first composite element outer side faces the second composite element outer side.

In these examples, plastic welding the edge joining portion 120 of the first composite element 100 to the edge joining portion 220 of the second composite element 200 comprises plastic welding the first side portion 161 of the connector 160 and the edge joining portion 120 of the first composite element 100 and plastic welding the second side portion 162 of the connector 160 and the edge joining portion 220 of the second composite element 200. The first side portion 161 of the connector 160 is thus bonded to the outer surface 127 of the edge joining portion 120 of the first composite element 100. Similarly, the second side portion 162 of the connector 160 is bonded to the outer surface 227 of the edge joining portion 220 of the second composite element 200.

In these examples, the connector 160 comprises a cross-section comprising a lower portion 163 and an upper portion 164. The first side portion 161 and the second side portions 162 outwardly extend from the lower portion 163 to the upper portion 164.

In figure 7a, the outer surface 127 of the edge joining portion 120 of the first composite element 100 and the outer surface 227 of the edge joining portion 220 of the second composite element 200 are an inclined straight surface. The first composite element 100 and the second composite element 200 are arranged in a V-shape butt-welding configuration. The first side portion 161 and the second side portion 162 comprise an inclined straight surface. The connector 160 of this figure comprises a triangular cross-sectional shape.

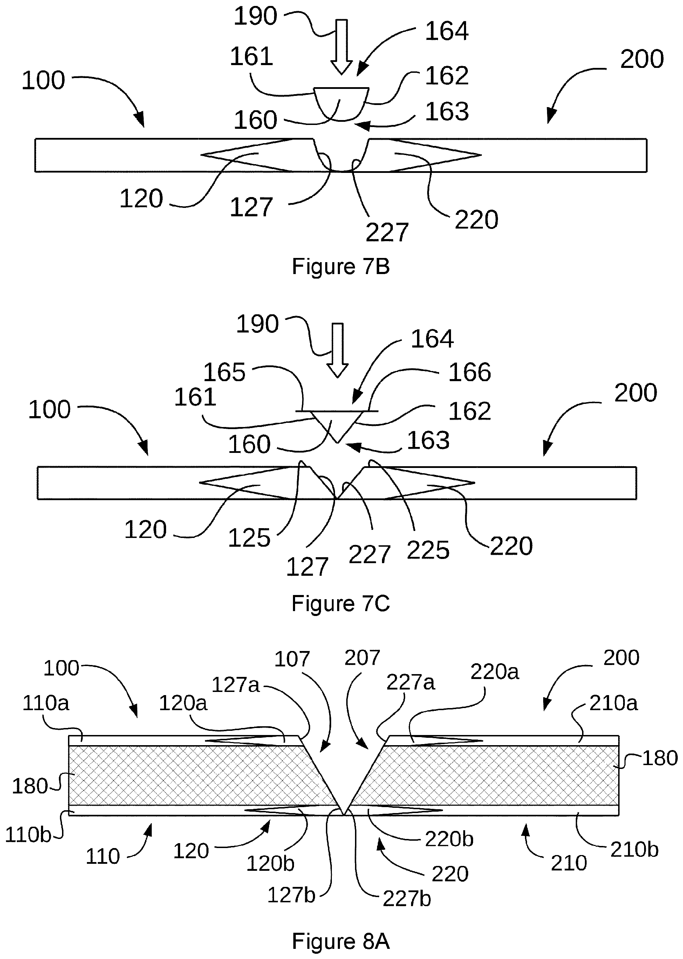

In figure 7b, the first composite element 100 and the second composite element 200 are arranged in a U-shaped butt-welding configuration. The first side portion 161 and the second side portion 162 comprise a rounded shape. This shape is configured to fit the rounded shape of the outer surfaces 127 and 227 of the composite elements 100 and 200.

The connector 160 of figure 7c is similar to the connector 160 of figure 7a. However, in figure 7c, the connector 160 comprises a first side extension 165 and a second side extension 166. The first side extension 165 is arranged at the upper portion 164 of the connector 160 and extends outwardly from the first side portion 161. Similarly, the second side extension 166 is arranged at the upper portion 164 of the connector 160 and extends outwardly from the second side portion 162.

When inserted, the first side extension 165 engages the upper surface 125 of the edge joining portion 120 of the first composite element 100 and the second side extension 166 engages the upper surface 225 of the edge joining portion 220 of the second composite element 200. The stability of the connector 160 may thus be enhanced. In some examples, the upper surfaces 125 and 225 may be stepped. The first side extension 165 and the second side extension 166 may respectively fit the step of the upper surfaces 125 and 225.

In this figure, the first side portion 161 and the second side portion 162 comprise an inclined straight surface, however, in other examples, the first side portion 161 and the second side portion 162 may be rounded, e.g. as the example depicted in figure 7b.

Figures 8a - 8c schematically represent joining a first composite element to a second composite element according to an example of the present disclosure.

In these figures, the first composite element 100 comprises a main portion 110 and an edge joining portion 120. The main portion 110 of the first composite element 100 comprises an upper main portion 110a and a lower main portion 110b. Similarly, the edge joining portion 120 comprises an upper edge joining portion 120a and a lower edge joining portion 120b. The upper edge joining portion 120a is attached to the upper main portion 110a and the lower edge joining portion 120b is attached to the lower main portion 110b. The edge joining portions 120a and 120b may be attached to the corresponding main portions 110a and 110b according to any of the examples herein disclosed.

In these figures, the upper main portion 110a and the upper edge joining portion 120a form a laminate composite material. Furthermore, the lower main portion 110b and the lower edge joining portion 120b form a laminate composite material. These laminates may be according to any of the examples herein disclosed.

In these figures, a core material 180 is arranged between the upper main portion 110a and the lower main portion 110b. The core material 180 is thus arranged between two laminate composite materials. The core material 180 may be according to any of the examples herein disclosed. The first composite element 100 of these figures is a sandwich panel. The first composite element 100 may be a blade shell sandwich panel.

As the first composite element 100, the second composite element 200 of these figures is a sandwich panel, e.g. a blade shell sandwich panel. The main portion 210 of the second composite element 200 comprises an upper main portion 210a and a lower main portion 210b. In these figures, the edge joining portion 220 of the second composite element 200 comprises an upper edge joining portion 220a attached to the upper main portion 210a and a lower edge joining portion 220b attached to the lower main portion 210b.

An upper laminate composite material is formed by the upper main portion 210a and the upper edge joining portion 220a. A lower laminate composite material is formed by the lower main portion 210b and the lower edge joining portion 220b. A core material 180 is arranged between the two laminate composite materials.

The core material 180 of the first composite element and/or of the second composite element includes a lightweight material, such as wood, foam, or any combination of them. The core material 180 may be a solid core, a honeycomb core, or a corrugated core. The thickness of the core material 180 may be between 20 mm and 100 mm. The thickness of the upper laminate composite material and the lower laminate composite material of both the first composite element 100 and the second composite element 200 may be between 20 mm and 80 mm.

In these figures, the first composite element 100 and the second composite element 200 are positioned with the respective edge joining portions 120 and 220 facing each other. The first composite element 100 and the second composite element 200 of these figures are beveled to define a V-shaped butt-joint welding configuration. The first composite element 100 comprises a first composite element outer side 107 and the second composite element 200 comprises a second composite element outer side 207. The first composite element outer side 107 and the second composite element outer side 207 extend inwardly from the lower edge joining portions 120b and 220b to the upper edge joining portions 120a and 220a. In these figures, the first composite element outer side 107 faces the second composite element outer side 207. In other examples, other welding configurations may also be suitable, e.g. U-shaped butt-joint welding configuration.

In these figures, the first composite element outer side 107 comprises a lower edge joining portion outer side 127b and an upper edge joining portion outer surface 127a. Between the lower edge joining portion outer side 127b and the upper edge joining portion outer surface 127a, the first composite element outer side 107 comprises a core material outer side. Similarly, the second composite element outer side 207 comprises a lower edge joining portion outer side 227b, a core material outer side and an upper edge joining portion outer surface 227a.

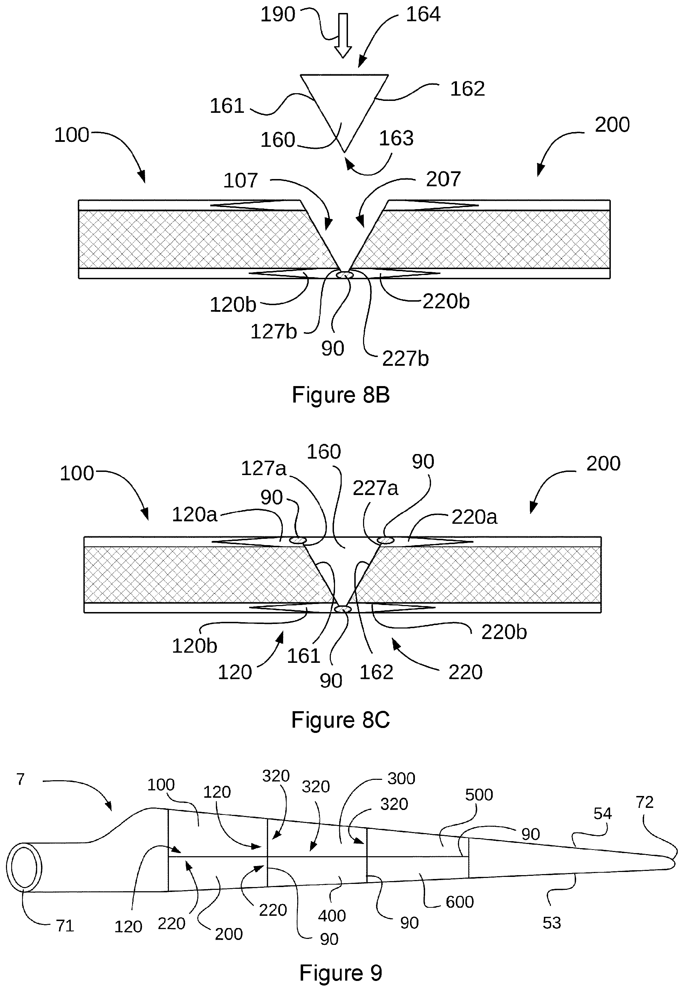

In figure 8b, a connector 160 is intended to be inserted through the direction 190 between the first composite element 100 and the second composite element 200. The connector 160 may be inserted after plastic welding the lower edge joining portion 120b of the first composite element 100 to the lower edge joining portion 220b of the second composite element 200.

In figure 8b, the lower edge joining portion 120b of the first composite element 100 is plastic welded to the lower edge joining portion 220b of the second composite element 200. The lower edge joining portions 120b and 220b may be plastic welded according to any of the examples herein disclosed. The lower edge joining portion outer side 127b and the lower edge joining portion outer side 227b may be heated and bonded together. A weld zone 90 is thus formed between the lower edge joining portion outer side 127b and the lower edge joining portion outer side 227b. The lower edge joining portion outer side 127b is thus joined to the lower edge joining portion outer side 227b. A filler may be used for filling a gap between the lower edge joining portion 120b of the first composite element 100 and the lower edge joining portion 220b of the second composite element 200.

The V-shape configuration of the first composite element 100 and the second composite element 200 allows the lower edge joining portions 120b and 220b to be accessed from above. A welding tool, e.g. a laser head, may be positioned between the first composite element outer side 107 and the second composite element outer side 207. This may allow plastic welding the lower edge joining portions 120b and 220b from above.

The connector 160 fills the space formed by the first composite element outer side 107 and the second composite element outer side 207. The connector 160 of figure 8b may be according to any of the examples herein disclosed. The first side portion 161 and the second side portion 162 outwardly extend from the lower portion 163 to the upper portion 164. At least a region of the first side portion 161 and the second side portion 162 comprise a thermoplastic material. The first side portion 161 of the connector 160 substantially fits the first composite element outer side 107 and the second side portion 162 of the connector 160 substantially fits the second composite element outer side 207.

In some examples, regions of the upper portion 164 of the connector also comprise a thermoplastic material. For example, the corner between the upper portion 164 and the first side portion 161 and the corner between the upper portion 164 and the second side portion 162 may comprise a thermoplastic material.

In this figure, the lower portion 163 is configured to be arranged on the weld zone 90 formed by the lower edge joining portion 120b of the first composite element 100 and the lower edge joining portion 220b of the second composite element 200. The connector 160 may thus cover the weld zone 90 between the lower edge joining portion 120b and the lower edge joining portion 220b.

In figure 8c, the connector 160 is joined to the first composite element 100 and to the second composite element 200. The connector 160 is inserted between the first composite element outer side and the second composite element outer side. The first side portion 161 of the connector 160 substantially fits the first composite element outer side and the second side portion 162 of the connector 160 substantially fits the second composite element outer side.

In this figure, the first side portion 161 of the connector 160 is plastic welded to the edge joining portion 120 of the first composite element 100. Plastic welding the edge joining portion 120 to the first side portion 161 of the connector 160 comprises plastic welding the upper edge joining portion 120a of the first composite element 100 to the first side portion 161. An upper region of the first side portion 161 and an upper region of the upper edge joining portion outer surface 127a of the upper edge joining portion 120a are heated and melted. A weld zone 90 is thus created between the first side portion 161 and the upper edge joining portion 120a of the first composite element 100.

In figure 8c, the second side portion 162 of the connector is also plastic welded to the edge joining portion 220 of the second composite element 200 by plastic welding the upper edge joining portion 220a of the second composite element 200 to the second side portion 162. An upper region of the second side portion 162 and an upper region of the upper edge joining portion outer surface 227a are heated and melted. The connector 160 is thus bonded to the second composite element 200 through a weld zone 90 created between the second side portion 162 and the upper edge joining portion 220a of the second composite element 200.

The connector is thus welded to the first composite element 100 and to the second composite element 200. Accordingly, sandwich panels may be plastic welded from above. This may allow the joining of several sandwich panels to form the blade shell of a wind turbine blade in a simple manner. Automatization of blade manufacturing may also be improved. Furthermore, the repair of connections between different blade shell parts may be performed from outside the wind turbine blade.

Figure 9 schematically represents a wind turbine blade comprising a first composite element joined to a second composite element according to an example of the present disclosure.

The wind turbine blade 7 of this example comprises a plurality of composite elements. In this example, the composite elements are blade shell parts. The blade shell parts may be laminate composite structures or blade shell sandwich panels. The composite elements may be according to any of the examples herein disclosed. The composite elements of this example are joined according to any of the examples herein disclosed.

A first composite element 100 is joined to a second composite element 200. The first composite element 100 is also joined to a third composite element 300. The first composite element 100 of this example comprises one edge joining portion 120 plastic welded with the second composite element 200 and another edge joining portion 120 plastic welded to the third composite element 300.

A weld zone 90 is thus formed between the one edge joining portion 120 of the first composite element 100 and one edge joining portion 220 of the second composite element 200. In this example, the weld zone 90 between the first composite element 100 and the second composite element 200 extends in a direction substantially parallel to a lengthwise direction extending from the blade root end 71 to the blade tip end 72.

In this figure, the first composite element 100 is joined to the third composite element 300 through a weld zone formed between the corresponding edge joining portions 120 and 320. The weld zone 90 joining the first composite element 100 to the third composite element 300 extends in a direction substantially parallel to a chord extending from the leading edge 53 to the trailing edge 54.

The third composite element 300 of these examples comprises three edge joining portions: one plastic welded to the first composite element 100, another plastic welded to a fourth composite element 400 and the last one plastic welded to a fifth composite element 500. Accordingly, the third composite element 300 is joined to the first composite element, to the fourth composite element 400 and to the fifth composite element 500 along the corresponding weld zone 90.

In this figure, the fourth composite element 400 is also joined to the second composite elements 200 and to the sixth composite elements 600 through the corresponding edge joining portions. In addition, the sixth composite element 600 and the fifth composite element 500 are joined together.

In other examples, the wind turbine blade 7 may comprise a different number of composite elements having the edge joining portion with a thermoplastic material. In other examples, the shape or the size of the composite elements may be different. For example, the wind turbine blade 7 may comprise more than two composite elements extending between the leading edge 53 and the trailing edge 54. The position of the composite elements may also vary, e.g. depending on the length on the wind turbine blade.

This written description uses examples to disclose the invention.

The patentable scope of the invention is defined by the claims.

If reference signs related to drawings are placed in parentheses in a claim, they are solely for attempting to increase the intelligibility of the claim, and shall not be construed as limiting the scope of the claim.

## Claims

1. A method (900) for joining a first composite element (100) and a second composite element (200) of a wind turbine blade (7), wherein each of the first composite element (100) and the second composite element (200) comprises one or more edge joining portions (120, 220) having a thermoplastic material,
wherein the first composite element (100) and the second composite element (200) are beveled to define a V-shaped butt-joint welding configuration,
wherein the first composite element (100) and the second composite element (200) comprises a main portion (110, 210) attached to the one or more edge joining portions (120, 220), the main portion (110, 210) comprising reinforcement fibers and a resin,
wherein the main portion (110, 210) and the one or more edge joining portions (120, 220) comprise an engagement surface (130, 140) to mechanically engage the main portion (110, 210) with the one or more edge joining portions (120, 220), wherein the engagement surfaces (130, 140) comprise an engagement inclined surface (112, 122, 113, 123, 114, 114);
wherein the main portion (110) of the first composite element (100) comprises an upper main portion (110a) and a lower main portion (110b), and wherein the one or more edge joining portions (120) of the first composite element (100) comprises an upper edge joining portion (120a) attached to the upper main portion (110a) and a lower edge joining portion (120b) attached the lower main portion (110b); and wherein the first composite element (100) comprises a core material (180) arranged between the upper main portion (110a) and the lower main portion (110b);
wherein the main portion (210) of the second composite element (200) comprises an upper main portion (210a) and a lower main portion (210b); and wherein the one or more edge joining portions (220) of the second composite element (200) comprises an upper edge joining portion (220a) attached to the upper main portion (210a) and a lower edge joining portion (220b) attached to the lower main portion (210b); and wherein the second composite element (200) comprises a core material (180) arranged between the upper main portion (210a) and the lower main portion (210b);
the method (900) comprising:
positioning (910) one edge joining portion (120) of the first composite element (100) to face one edge joining portion (220) of the second composite element (200);
inserting a connector (160) between the first composite element (100) and the second composite element (200), the connector (160) comprising a first side portion (161) and a second side portion (162), at least a region of the side portions (161, 162) comprising a thermoplastic material; and
plastic welding (920) the one edge joining portion (120) of the first composite element (100) to the one edge joining portion (220) of the second composite element (200), wherein the plastic welding comprises:
plastic welding the lower edge joining portion (120b) of the first composite element (100) to the lower edge joining portion (220b) of the second composite element (200);
plastic welding the first side portion (161) of the connector (160) and the upper edge joining portion (120a) of the one edge joining portion (120) of the first composite element (100); and
plastic welding the second side portion (162) of the connector (160) and the upper edge joining portion (220a) of the one edge joining portion (220) of the second composite element (200).

2. The method (900) according to claim 1, wherein plastic welding (920) comprises heating a region of the one edge joining portion (120, 220) of the first composite element (100) and/or of the second composite element (200).

3. The method (900) according to any of claims 1 - 2, wherein plastic welding (920) comprises at least one of laser welding, direct heating welding, induction welding, ultrasonic welding, resistance welding and infrared welding.

4. The method (900) according to any of claims 1 - 3, wherein positioning (910) one edge joining portion (120) of the first composite element (100) to face one edge joining portion (220) of the second composite element (200) comprises positioning the edge joining portions (120, 220) in a butt-welding configuration.

5. The method (900) according to any of claims 1 - 4, wherein the reinforcement fibers and/or the resin of the main portion (110, 210) of the first composite element (100) and of the second composite element (200) are different.

6. The method (900) according to any of claims 1 - 5, wherein the reinforcement fibers and/or the resin of the main portion (110, 210) of the first composite element (100) and of the second composite element (200) are the same.

7. The method (900) according to any of claims 1 - 6, wherein the resin of the main portion (110, 210) of the first composite element (100) and/or the second composite element (200) is a thermoset resin.

8. The method (900) according to any of claims 1 - 7, wherein one of the engagement surfaces (130, 140) comprises a plurality of protrusions and the other of the engagement surfaces (130, 140) comprises a plurality of depressions configured to receive the plurality of protrusions.

9. The method (900) according to any of claims 1 - 8, comprising forming the first composite element (100) and/or the second composite element (200), wherein forming one of the first composite element (100) and/or the second composite element (200) comprises molding the main portion (110, 210) and the one or more edge joining portions (120, 220) together.

10. The method (900) according to any of claims 1 - 9, wherein the connector (160) comprises a cross-section having a lower portion (163) and an upper portion (164), wherein the first side portion (161) and the second side portion (162) outwardly extend from the lower portion (163) to the upper portion (164).

11. A wind turbine blade (7) comprising a first composite element (100) joined to a second composite element (200) according to the method of any of the claims 1 - 10,
wherein each of the first composite element (100) and the second composite element (200) comprises one or more edge joining portions (120, 220) having a thermoplastic material,
wherein the first composite element (100) and the second composite element (200) are beveled to define a V-shaped butt-joint welding configuration,
wherein the first composite element (100) and the second composite element (200) comprise a main portion (110, 210) attached to the one or more edge joining portions (120, 220), the main portion (110, 210) comprising reinforcement fibers and a resin,
wherein the main portion (110, 210) and the one or more edge joining portions (120, 220) comprise an engagement surface (130, 140) to mechanically engage the main portion (110, 210) with the one or more edge joining portions (120, 220), wherein the engagement surfaces (130, 140) comprise an engagement inclined surface (112, 122, 113, 123, 114, 114);
wherein the main portion (110) of the first composite element (100) comprises an upper main portion (110a) and a lower main portion (110b), and wherein the one or more edge joining portions (120) of the first composite element (100) comprises an upper edge joining portion (120a) attached to the upper main portion (110a) and a lower edge joining portion (120b) attached the lower main portion (110b); and wherein the first composite element (100) comprises a core material (180) arranged between the upper main portion (110a) and the lower main portion (110b);
wherein the main portion (210) of the second composite element (200) comprises an upper main portion (210a) and a lower main portion (210b); and wherein the one or more edge joining portions (220) of the second composite element (200) comprises an upper edge joining portion (220a) attached to the upper main portion (210a) and a lower edge joining portion (220b) attached to the lower main portion (210b); and wherein the second composite element (200) comprises a core material (180) arranged between the upper main portion (210a) and the lower main portion (210b);
wherein the blade further comprises a connector (160) between the first composite element (100) and the second composite element (200), the connector (160) comprising a first side portion (161) and a second side portion (162), at least a region of the side portions (161, 162) comprising a thermoplastic material;
wherein the lower edge joining portion (120b) of the first composite element (100) is plastic welded to the lower edge joining portion (220b) of the second composite element (200);
wherein the first side portion (161) of the connector (160) is plastic welded to the upper edge joining portion (120a) of the one edge joining portion (120) of the first composite element (100); and
wherein the second side portion (162) of the connector (160) is plastic welded to the upper edge joining portion (220a) of the one edge joining portion (220) of the second composite element (200).

## Patentansprüche

1. Ein Verfahren (900) zum Verbinden eines ersten Verbundelements (100) und eines zweiten Verbundelements (200) eines Windturbinenblatts (7), wobei jedes von dem ersten Verbundelement (100) und dem zweiten Verbundelement (200) einen oder mehrere Kantenverbindungsabschnitte (120, 220) mit einem thermoplastischen Material umfasst,
wobei das erste Verbundelement (100) und das zweite Verbundelement (200) abgeschrägt sind, um eine V-förmige Stoßschweißkonfiguration zu definieren,
wobei das erste Verbundelement (100) und das zweite Verbundelement (200) einen Hauptabschnitt (110, 210) umfassen, der an dem einen oder den mehreren Kantenverbindungsabschnitten (120, 220) angebracht ist, wobei der Hauptabschnitt (110, 210) Verstärkungsfasern und ein Harz umfasst,
wobei der Hauptabschnitt (110, 210) und der eine oder die mehreren Kantenverbindungsabschnitte (120, 220) eine Eingriffsfläche (130, 140) umfassen, um den Hauptabschnitt (110, 210) mechanisch mit dem einen oder den mehreren Kantenverbindungsabschnitten (120, 220) in Eingriff zu bringen, wobei die Eingriffsflächen (130, 140) eine geneigte Eingriffsfläche (112, 122, 113, 123, 114, 114) umfassen;
wobei der Hauptabschnitt (110) des ersten Verbundelements (100) einen oberen Hauptabschnitt (110a) und einen unteren Hauptabschnitt (110b) umfasst, und wobei der eine oder die mehreren Kantenverbindungsabschnitte (120) des ersten Verbundelements (100) einen oberen Kantenverbindungsabschnitt (120a), der an dem oberen Hauptabschnitt (110a) angebracht ist, und einen unteren Kantenverbindungsabschnitt (120b), der an dem unteren Hauptabschnitt (110b) angebracht ist, umfasst; und wobei das erste Verbundelement (100) ein Kernmaterial (180) umfasst, das zwischen dem oberen Hauptabschnitt (110a) und dem unteren Hauptabschnitt (110b) angeordnet ist;
wobei der Hauptabschnitt (210) des zweiten Verbundelements (200) einen oberen Hauptabschnitt (210a) und einen unteren Hauptabschnitt (210b) umfasst; und wobei der eine oder die mehreren Kantenverbindungsabschnitte (220) des zweiten Verbundelements (200) einen oberen Kantenverbindungsabschnitt (220a), der an dem oberen Hauptabschnitt (210a) angebracht ist, und einen unteren Kantenverbindungsabschnitt (220b), der an dem unteren Hauptabschnitt (210b) angebracht ist, umfasst; und wobei das zweite Verbundelement (200) ein Kernmaterial (180) umfasst, das zwischen dem oberen Hauptabschnitt (210a) und dem unteren Hauptabschnitt (210b) angeordnet ist;
wobei das Verfahren (900) Folgendes umfasst:
positionieren (910) eines Kantenverbindungsabschnitts (120) des ersten Verbundelements (100), um einem Kantenverbindungsabschnitt (220) des zweiten Verbundelements (200) zugewandt zu sein;
einsetzen eines Verbindungsstücks (160) zwischen das erste Verbundelement (100) und das zweite Verbundelement (200), wobei der Verbindungsstück (160) einen ersten Seitenabschnitt (161) und einen zweiten Seitenabschnitt (162) umfasst, wobei mindestens ein Bereich der Seitenabschnitte (161, 162) ein thermoplastisches Material umfasst; und
kunststoffschweißen (920) des einen Kantenverbindungsabschnitts (120) des ersten Verbundelements (100) an den einen Kantenverbindungsabschnitt (220) des zweiten Verbundelements (200), wobei das Kunststoffschweißen Folgendes umfasst:
kunststoffschweißen des unteren Kantenverbindungsabschnitts (120b) des ersten Verbundelements (100) an den unteren Kantenverbindungsabschnitt (220b) des zweiten Verbundelements (200);
kunststoffschweißen des ersten Seitenabschnitts (161) des Verbindungsstücks (160) und des oberen Kantenverbindungsabschnitts (120a) des einen Kantenverbindungsabschnitts (120) des ersten Verbundelements (100); und
kunststoffschweißen des zweiten Seitenabschnitts (162) des Verbindungsstücks (160) und des oberen Kantenverbindungsabschnitts (220a) des einen Kantenverbindungsabschnitts (220) des zweiten Verbundelements (200).

2. Das Verfahren (900) nach Anspruch 1, wobei das Kunststoffschweißen (920) das Heizen eines Bereichs des einen Kantenverbindungsabschnitts (120, 220) des ersten Verbundelements (100) und/oder des zweiten Verbundelements (200) umfasst.

3. Das Verfahren (900) nach einem der Ansprüche 1 bis 2, wobei das Kunststoffschweißen (920) mindestens eines von Laserschweißen, Direktheizschweißen, Induktionsschweißen, Ultraschallschweißen, Widerstandsschweißen und Infrarotschweißen umfasst.

4. Das Verfahren (900) nach einem der Ansprüche 1 bis 3, wobei das Positionieren (910) eines Kantenverbindungsabschnitts (120) des ersten Verbundelements (100), so dass er einem Kantenverbindungsabschnitt (220) des zweiten Verbundelements (200) zugewandt ist, das Positionieren der Kantenverbindungsabschnitte (120, 220) in einer Stumpfschweißkonfiguration umfasst.

5. Das Verfahren (900) nach einem der Ansprüche 1 bis 4, wobei die Verstärkungsfasern und/oder das Harz des Hauptabschnitts (110, 210) des ersten Verbundelements (100) und des zweiten Verbundelements (200) unterschiedlich sind.

6. Das Verfahren (900) nach einem der Ansprüche 1 bis 5, wobei die Verstärkungsfasern und/oder das Harz des Hauptabschnitts (110, 210) des ersten Verbundelements (100) und des zweiten Verbundelements (200) gleich sind.

7. Das Verfahren (900) nach einem der Ansprüche 1 bis 6, wobei das Harz des Hauptabschnitts (110, 210) des ersten Verbundelements (100) und/oder des zweiten Verbundelements (200) ein duroplastisches Harz ist.

8. Das Verfahren (900) nach einem der Ansprüche 1 bis 7, wobei eine der Eingriffsflächen (130, 140) eine Vielzahl von Vorsprüngen umfasst und die andere der Eingriffsflächen (130, 140) eine Vielzahl von Vertiefungen umfasst, die dazu konfiguriert sind, die Vielzahl von Vorsprüngen aufzunehmen.

9. Das Verfahren (900) nach einem der Ansprüche 1 bis 8, umfassend das Bilden des ersten Verbundelements (100) und/oder des zweiten Verbundelements (200), wobei das Bilden eines von dem ersten Verbundelement (100) und/oder dem zweiten Verbundelement (200) das Zusammenformen des Hauptabschnitts (110, 210) und des einen oder der mehreren Kantenverbindungsabschnitte (120, 220) umfasst.

10. Das Verfahren (900) nach einem der Ansprüche 1 bis 9, wobei der Verbindungsstück (160) einen Querschnitt mit einem unteren Abschnitt (163) und einem oberen Abschnitt (164) umfasst, wobei sich der erste Seitenabschnitt (161) und der zweite Seitenabschnitt (162) von dem unteren Abschnitt (163) zu dem oberen Abschnitt (164) nach außen erstrecken.

11. Ein Windturbinenblatt (7) umfassend ein erstes Verbundelement (100), das mit einem zweiten Verbundelement (200) gemäß dem Verfahren von einem der Ansprüche 1 bis 10 verbunden ist,
wobei jedes des ersten Verbundelements (100) und des zweiten Verbundelements (200) einen oder mehrere Kantenverbindungsabschnitte (120, 220) mit einem thermoplastischen Material umfasst,
wobei das erste Verbundelement (100) und das zweite Verbundelement (200) abgeschrägt sind, um eine V-förmige Stoßschweißkonfiguration zu definieren,
wobei das erste Verbundelement (100) und das zweite Verbundelement (200) einen Hauptabschnitt (110, 210) umfassen, der an dem einen oder den mehreren Kantenverbindungsabschnitten (120, 220) angebracht ist, wobei der Hauptabschnitt (110, 210) Verstärkungsfasern und ein Harz umfasst,
wobei der Hauptabschnitt (110, 210) und der eine oder die mehreren Kantenverbindungsabschnitte (120, 220) eine Eingriffsfläche (130, 140) umfassen, um den Hauptabschnitt (110, 210) mechanisch mit dem einen oder den mehreren Kantenverbindungsabschnitten (120, 220) in Eingriff zu bringen, wobei die Eingriffsflächen (130, 140) eine geneigte Eingriffsfläche (112, 122, 113, 123, 114, 114) umfassen;
wobei der Hauptabschnitt (110) des ersten Verbundelements (100) einen oberen Hauptabschnitt (110a) und einen unteren Hauptabschnitt (110b) umfasst, und wobei der eine oder die mehreren Kantenverbindungsabschnitte (120) des ersten Verbundelements (100) einen oberen Kantenverbindungsabschnitt (120a), der an dem oberen Hauptabschnitt (110a) angebracht ist, und einen unteren Kantenverbindungsabschnitt (120b), der an dem unteren Hauptabschnitt (110b) angebracht ist, umfasst; und wobei das erste Verbundelement (100) ein Kernmaterial (180) umfasst, das zwischen dem oberen Hauptabschnitt (110a) und dem unteren Hauptabschnitt (110b) angeordnet ist;
wobei der Hauptabschnitt (210) des zweiten Verbundelements (200) einen oberen Hauptabschnitt (210a) und einen unteren Hauptabschnitt (210b) umfasst; und wobei der eine oder die mehreren Kantenverbindungsabschnitte (220) des zweiten Verbundelements (200) einen oberen Kantenverbindungsabschnitt (220a), der an dem oberen Hauptabschnitt (210a) angebracht ist, und einen unteren Kantenverbindungsabschnitt (220b), der an dem unteren Hauptabschnitt (210b) angebracht ist, umfasst; und wobei das zweite Verbundelement (200) ein Kernmaterial (180) umfasst, das zwischen dem oberen Hauptabschnitt (210a) und dem unteren Hauptabschnitt (210b) angeordnet ist;
wobei das Blatt ferner ein Verbindungsstück (160) zwischen dem ersten Verbundelement (100) und dem zweiten Verbundelement (200) umfasst, wobei das Verbindungsstück (160) einen ersten Seitenabschnitt (161) und einen zweiten Seitenabschnitt (162) umfasst, wobei mindestens ein Bereich der Seitenabschnitte (161, 162) ein thermoplastisches Material umfasst;
wobei der untere Kantenverbindungsabschnitt (120b) des ersten Verbundelements (100) an dem unteren Kantenverbindungsabschnitt (220b) des zweiten Verbundelements (200) mittels Kunststoffschweißen verbunden ist;
wobei der erste Seitenabschnitt (161) des Verbindungsstücks (160) mit dem oberen Kantenverbindungsabschnitt (120a) des einen Kantenverbindungsabschnitts (120) des ersten Verbundelements (100) mittels Kunststoffschweißen verbunden ist; und
wobei der zweite Seitenabschnitt (162) des Verbindungsstücks (160) mit dem oberen Kantenverbindungsabschnitt (220a) des einen Kantenverbindungsabschnitts (220) des zweiten Verbundelements (200) mittels Kunststoffschweißen verbunden ist.

## Revendications

1. Un procédé (900) pour joindre un premier élément composite (100) et un second élément composite (200) d'une pale d'éolienne (7), dans lequel chacun du premier élément composite (100) et du second élément composite (200) comprend une ou plusieurs parties de jonction de bord (120, 220) ayant un matériau thermoplastique,
dans lequel le premier élément composite (100) et le second élément composite (200) sont biseautés de manière à définir une configuration de soudage bout à bout en forme de V,
dans lequel le premier élément composite (100) et le second élément composite (200) comprend une partie principale (110, 210) attachée à la une ou aux plusieurs parties de jonction de bord (120, 220), la partie principale (110, 210) comprenant des fibres de renforcement et une résine,
dans lequel la partie principale (110, 210) et la une ou les plusieurs parties de jonction de bord (120, 220) comprend une surface d'engagement (130, 140) pour engager mécaniquement la partie principale (110, 210) avec la une ou les plusieurs parties de jonction de bord (120, 220), dans lequel les surfaces d'engagement (130, 140) comprennent une surface inclinée d'engagement (112, 122, 113, 123, 114, 114) ;
dans lequel la partie principale (110) du premier élément composite (100) comprend une partie principale supérieure (110a) et une partie principale inférieure (110b), et dans lequel la une ou les plusieurs parties de jonction de bord (120) du premier élément composite (100) comprend une partie de jonction de bord supérieur (120a) attachée à la partie principale supérieure (110a) et une partie de jonction de bord inférieur (120b) attachée à la partie principale inférieure (110b) ; et dans lequel le premier élément composite (100) comprend un matériau de noyau (180) disposé entre la partie principale supérieure (110a) et la partie principale inférieure (110b) ;
dans lequel la partie principale (210) du second élément composite (200) comprend une partie principale supérieure (210a) et une partie principale inférieure (210b) ; et dans lequel la une ou les plusieurs parties de jonction de bord (220) du second élément composite (200) comprennent une partie de jonction de bord supérieur (220a) attachée à la partie principale supérieure (210a) et une partie de jonction de bord inférieur (220b) attachée à la partie principale inférieure (210b) ; et dans lequel le second élément composite (200) comprend un matériau de noyau (180) disposé entre la partie principale supérieure (210a) et la partie principale inférieure (210b) ;
le procédé (900) comprenant :
positionner (910) une partie de jonction de bord (120) du premier élément composite (100) face à une partie de jonction de bord (220) du second élément composite (200) ;
insérer un élément de raccordement (160) entre le premier élément composite (100) et le second élément composite (200), l'élément de raccordement (160) comprenant une première partie latérale (161) et une seconde partie latérale (162), au moins une région des parties latérales (161, 162) comprenant un matériau thermoplastique ; et
joindre par soudage plastique (920) ladite une partie de jonction de bord (120) du premier élément composite (100) à ladite une partie de jonction de bord (220) du second élément composite (200), dans lequel joindre par soudage plastique comprend :
joindre par soudage plastique la partie de jonction de bord inférieur (120b) du premier élément composite (100) à la partie de jonction de bord inférieur (220b) du second élément composite (200) ;
joindre par soudage plastique la première partie latérale (161) de l'élément de raccordement (160) et la partie de jonction de bord supérieur (120a) de ladite une partie de jonction de bord (120) du premier élément composite (100) ; et
joindre par soudage plastique la seconde partie latérale (162) de l'élément de raccordement (160) et la partie de jonction de bord supérieur (220a) de ladite une partie de jonction de bord (220) du second élément composite (200).

2. Le procédé (900) selon la revendication 1, dans lequel joindre par soudage plastique (920) comprend chauffer une région de ladite une partie de jonction de bord (120, 220) du premier élément composite (100) et/ou du second élément composite (200).

3. Le procédé (900) selon l'une quelconque des revendications 1 à 2, dans lequel joindre par soudage plastique (920) comprend au moins l'un parmi soudage au laser, soudage par chauffage direct, soudage par induction, soudage par ultrasons, soudage par résistance et soudage par infrarouge.

4. Le procédé (900) selon l'une quelconque des revendications 1 à 3, dans lequel positionner (910) une partie de jonction de bord (120) du premier élément composite (100) face à une partie de jonction de bord (220) du second élément composite (200) comprend positionner les parties de jonction de bord (120, 220) dans une configuration de soudage bout à bout.

5. Le procédé (900) selon l'une quelconque des revendications 1 à 4, dans lequel les fibres de renforcement et/ou la résine de la partie principale (110, 210) du premier élément composite (100) et du second élément composite (200) sont différentes.

6. Le procédé (900) selon l'une quelconque des revendications 1 à 5, dans lequel les fibres de renforcement et/ou la résine de la partie principale (110, 210) du premier élément composite (100) et du second élément composite (200) sont les mêmes.

7. Le procédé (900) selon l'une quelconque des revendications 1 à 6, dans lequel la résine de la partie principale (110, 210) du premier élément composite (100) et/ou du second élément composite (200) est une résine thermodurcie.

8. Le procédé (900) selon l'une quelconque des revendications 1 à 7, dans lequel l'une des surfaces d'engagement (130, 140) comprend une pluralité de saillies et l'autre des surfaces d'engagement (130, 140) comprend une pluralité de dépressions configurées pour recevoir la pluralité de saillies.

9. Le procédé (900) selon l'une quelconque des revendications 1 à 8, comprenant former le premier élément composite (100) et/ou le second élément composite (200), dans lequel former l'un du premier élément composite (100) et/ou du second élément composite (200) comprend mouler la partie principale (110, 210) et la une ou les plusieurs parties de jonction de bord (120, 220) ensemble.

10. Le procédé (900) selon l'une quelconque des revendications 1 à 9, dans lequel l'élément de raccordement (160) comprend une section transversale ayant une partie inférieure (163) et une partie supérieure (164), dans lequel la première partie latérale (161) et la seconde partie latérale (162) s'étendent vers l'extérieur de la partie inférieure (163) à la partie supérieure (164).

11. Une pale d'éolienne (7) comprenant un premier élément composite (100) joint à un second élément composite (200) selon le procédé de l'une quelconque des revendications 1 à 10,
dans lequel chacun du premier élément composite (100) et du second élément composite (200) comprend une ou plusieurs parties de jonction de bord (120, 220) ayant un matériau thermoplastique,
dans lequel le premier élément composite (100) et le second élément composite (200) sont biseautés de manière à définir une configuration de soudage bout à bout en forme de V,
dans lequel le premier élément composite (100) et le second élément composite (200) comprennent une partie principale (110, 210) attachée à la une ou aux plusieurs parties de jonction de bord (120, 220), la partie principale (110, 210) comprenant des fibres de renforcement et une résine,
dans lequel la partie principale (110, 210) et la une ou les plusieurs parties de jonction de bord (120, 220) comprend une surface d'engagement (130, 140) pour engager mécaniquement la partie principale (110, 210) avec la une ou les plusieurs parties de jonction de bord (120, 220), dans lequel les surfaces d'engagement (130, 140) comprennent une surface inclinée d'engagement (112, 122, 113, 123, 114, 114) ;
dans lequel la partie principale (110) du premier élément composite (100) comprend une partie principale supérieure (110a) et une partie principale inférieure (110b), et dans lequel la une ou les plusieurs parties de jonction de bord (120) du premier élément composite (100) comprend une partie de jonction de bord supérieur (120a) attachée à la partie principale supérieure (110a) et une partie de jonction de bord inférieur (120b) attachée à la partie principale inférieure (110b) ; et dans lequel le premier élément composite (100) comprend un matériau de noyau (180) disposé entre la partie principale supérieure (110a) et la partie principale inférieure (110b) ;
dans lequel la partie principale (210) du second élément composite (200) comprend une partie principale supérieure (210a) et une partie principale inférieure (210b) ; et dans lequel la une ou les plusieurs parties de jonction de bord (220) du second élément composite (200) comprend une partie de jonction de bord supérieur (220a) attachée à la partie principale supérieure (210a) et une partie de jonction de bord inférieur (220b) attachée à la partie principale inférieure (210b) ; et dans lequel le second élément composite (200) comprend un matériau de noyau (180) disposé entre la partie principale supérieure (210a) et la partie principale inférieure (210b) ;
dans lequel la pale comprend en outre un élément de raccordement (160) entre le premier élément composite (100) et le second élément composite (200), l'élément de raccordement (160) comprenant une première partie latérale (161) et une seconde partie latérale (162), au moins une région des parties latérales (161, 162) comprenant un matériau thermoplastique ;
dans lequel la partie de jonction de bord inférieur (120b) du premier élément composite (100) est jointe par soudage plastique à la partie de jonction de bord inférieur (220b) du second élément composite (200) ;
dans lequel la première partie latérale (161) de l'élément de raccordement (160) est jointe par soudage plastique à la partie de jonction de bord supérieur (120a) de ladite une partie de jonction de bord (120) du premier élément composite (100) ; et
dans lequel la seconde partie latérale (162) de l'élément de raccordement (160) est jointe par soudage plastique à la partie de jonction de bord supérieur (220a) de ladite une partie de jonction de bord (220) du second élément composite (200).
